# EUROPÄISCHE PATENTSCHRIFT

(11) **EP 1 921 339 B1**
(45) Veröffentlichungstag und Bekanntmachung des Hinweises auf die Patenterteilung: **18.06.2014**
(21) Anmeldenummer: 06023345.9
(22) Anmeldetag: 09.11.2006
(51) Int. Cl.: F16D 41/07

(54) **Freilauf mit Bandelement**
Freewheel with strip element
Roue libre avec élément en forme de bande

(43) Veröffentlichungstag der Anmeldung: 14.05.2008
(73) Patentinhaber: Paul Müller GmbH & Co. KG Unternehmensbeteiligungen, 90411 Nürnberg (DE)
(72) Erfinder: Feldmeier, Fritz, Dr., 90475 Nürnberg (DE)
(74) Vertreter: Lösch, Christoph Ludwig Klaus

(56) Entgegenhaltungen:
- CH-A- 218 964
- DE-U1- 8 616 605
- US-A- 2 630 896
- US-A- 2 940 567
- US-A- 3 241 641
- DEUTSCHER VERLAGS-ANSTALT GMBH,STUTTGART: 'Grundlagen des Maschinenbaus', Bd. 1, DEUTSCHLAND vol. LUEGER: 'Lexikon der Technik', Seite 136

## Beschreibung

Die Erfindung betrifft einen Klemmkörperfreilauf mit den Merkmalen des Oberbegriffs des Patentanspruchs 1.

Bei Richtungskupplungen sind zwischen zwei parallelen geraden oder gekrümmten Flächen nichtzylindrische Teile angeordnet, die ständig mit diesen Flächen in Berührungskontakt gehalten werden müssen. Typische Beispiele sind Klemmleisten und Richtungskupplungen, wie z.B. Freiläufe, Rücklaufsperren und Überholkupplungen. Im folgenden wird nur der Begriff Freilauf genannt.

Freiläufe bestehen aus zwei konzentrischen Ringen mit Klemmelementen, die zwischen der zylindrischen Innenfläche des äußeren Rings und der zylindrischen Außenfläche des inneren Rings angeordnet sind. Die Klemmelemente haben eine nichtzylindrische Kontur und werden im allgemeinen in gleichmäßigen Abständen in einem ringförmigen Abstandshalter, dem Käfig, gehalten.

Außer diesem Käfig ist ein federndes Element notwendig, welches die Klemmelemente in ständigem Kontakt mit den Klemmflächen hält.

Eine aus Federstahldraht gebogene Formfeder als federndes Element ist aufwendig in der Herstellung und sehr zeitaufwendig von Hand zu montieren.

DE 86 16 605 U1 zeigt insgesamt drei Ausführungsformen eines Klemmkörperfreilaufs. Die gemeinsamen Bestandteile dieser Ausführungsformen sind Klemmelemente, die in einem Spalt zwischen einem Innenring und einem Außenring angeordnet sind, ein Käfig und ein umlaufendes Bandelement. Das Bandelement besitzt Federzungen, die die Klemmkörper mit einer Druckkraft beaufschlagen können.

US 2 630 896 A beschreibt einen Klemmkörperfreilauf mit Klemmelementen, die in einem Spalt zwischen einem Innenring und einem Außenring angeordnet sind, einem Käfig und ein umlaufendes Bandelement. Das Bandelement besitzt Stegelemente, die die Klemmkörper mit einer Druckkraft beaufschlagen können.

US 2 940 567 A beschreibt insgesamt zwei Ausführungsformen eines Klemmkörperfreilaufs. Beide Ausführungsformen weisen Klemmelemente auf, die in einem Spalt zwischen einem Innenring und einem Außenring angeordnet sind, ein Käfig und ein umlaufendes Bandelement. Das Bandelement besitzt Stegelemente, die die Klemmkörper mit einer Druckkraft beaufschlagen können.

Der Erfindung liegt die Aufgabe zugrunde, einen Klemmkörperfreilauf anzubieten, bei dem die Klemmelemente besonders einfach federnd gehaltert werden. Die Aufgabe wird durch die Merkmale des kennzeichnenden Teils des Patentanspruchs 1 in Verbindung mit den Merkmalen des Oberbegriffs gelöst. Vorteilhafte Ausführungsformen der Erfindung werden in den Unteransprüchen beschrieben.

Erfindungsgemäß wird nun ein Federband verwendet, das seitlich nicht über den Käfig bzw. den Klemmringen ragt und deckungsgleich mit dem Käfig Aussparungen für die Aufnahme der Klemmelemente aufweist. Das Federband aus dünnem Federblech liegt formschlüssig am Innendurchmesser des Käfigs an und wird von den Klemmelementen in seiner richtigen Position gehalten.

Das Federblech ist an einer Längsseite der Aussparung vom Käfig weg aufgebogen, so daß ein federnder Steg entsteht, welcher zum einen das Klemmelement am Herausfallen hindert und zum anderen auf den Fuß des Klemmelements eine Kippkraft ausübt, die das Klemmelement sicher in Kontakt mit den beiden Klemmflächen hält.

Das Federband wird endlos gestanzt und kann, wenn beispielsweise der Abstand a der Durchbrüche Pi oder ein Vielfaches ist, für alle Durchmesser der Freiläufe verwendet werden.

Das Federband wird einfach auf die Umfangslänge des gewählten Freilaufdurchmessers abgelängt. Das abgelängte Federband wird in den Käfig eingelegt und fixiert sich bei der Montage der Klemmelemente von selbst.

Die Anfederkraft kann über die richtige Wahl des Biegeradius am Federsteg und die Formgebung des Federstegs den Erfordernissen angepaßt werden.

### Die Erfindung wird an den folgenden Abbildungen beschrieben:

- Fig. 1: perspektivische Darstellung eines Bandelements
- Fig. 2: Ansicht A nach Fig.1,
- Fig. 3: Ansicht B nach Fig.1,
- Fig. 4: Ansicht C nach Fig.1,
- Fig. 5: ein Teillängsschnitt des Bandelements nach Fig. 1
- Fig. 6: eine alternative Ansicht A nach Fig.1,
- Fig. 7: Detail eines Freilaufs mit montiertem Bandelement sowie
- Fig. 8: Detail eines Freilaufs mit montiertem Bandelement im Betriebszustand.

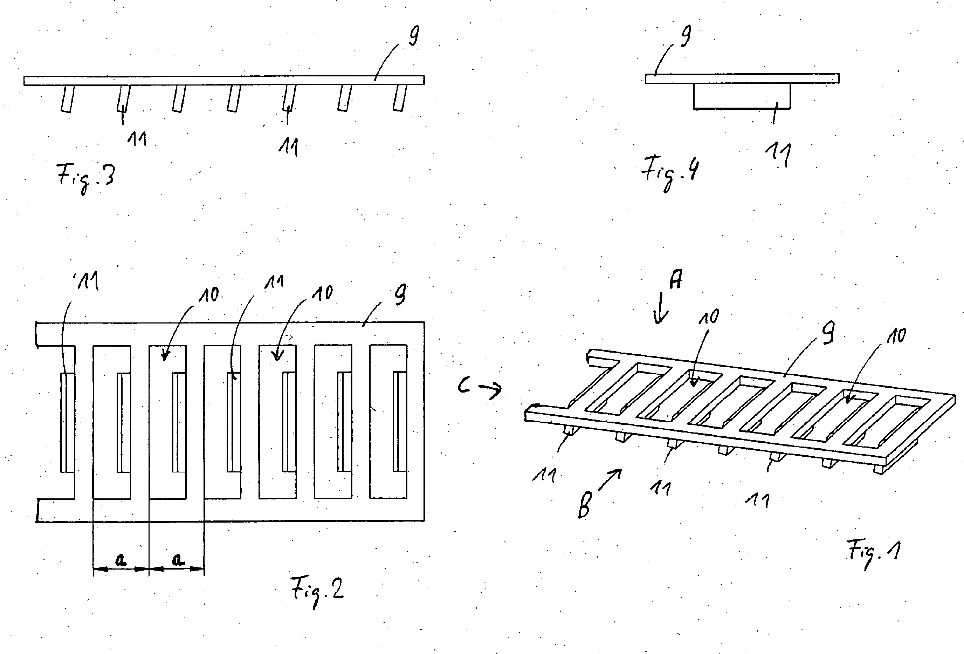

Fig. 1 - 4 zeigen einen Abschnitt des endlos gestanzten Bandelements 9 in der Drauf- und Seitenansicht. Die Ausnehmungen (Durchbrüche) 10 mit den gebogenen Stegelementen (Federstegen) 11 zur Aufnahme der Klemmkörper 5 sind im konstanten Abstand a gestanzt.

Für eine universelle Verwendung des Bandelements 9 ist es vorteilhaft, den Abstand a = Pi (oder je nach Größe der Klemmkörper 5) ein Vielfaches davon zu wählen.

Fig. 3 zeigt die Seitenansicht eines Durchbruchs 10 mit dem gebogenen Federsteg 11. Die Länge I des Federstegs 3 ist maximal die Breite des Durchbruchs 10 und muß mit Ausnehmung (Einhängenase) 12 des Klemmkörpers 5 abgestimmt werden.

Der Biegewinkel α des Federstegs 11 ist an die Kontur des Klemmkörpers 5 angepaßt und ist so gewählt, daß die geeignete Federkraft auf den Klemmkörper 5 wirkt. Mit dem Winkel α läßt sich die Federkraft des Federstegs 11 beeinflussen.

Neben dem Anstellwinkel α sind die Breite b des Federstegs 11 für die Federkraft bestimmend. Der Kontakt des Federstegs 11 am Klemmkörper 5 kann mittels einer oder mehrerer Aussparungen 13 am Federsteg 11 modifiziert werden. Damit läßt sich auch der Biegeverlauf des Federstegs 11 variieren.

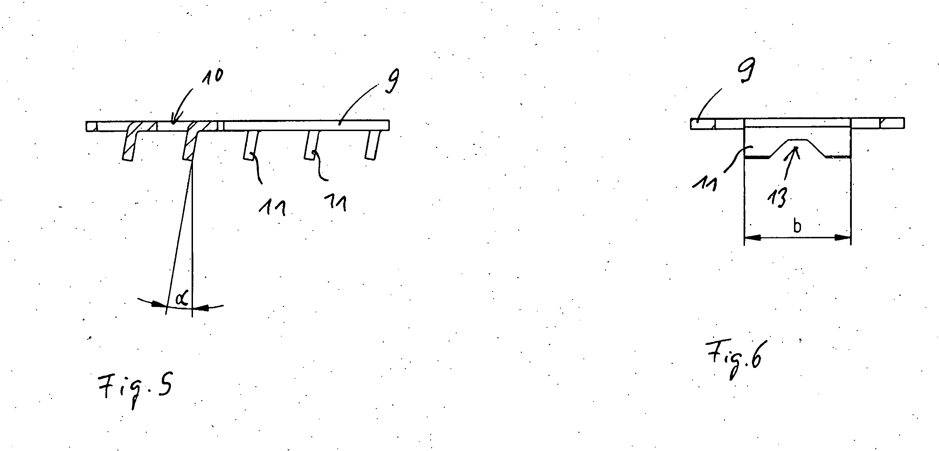

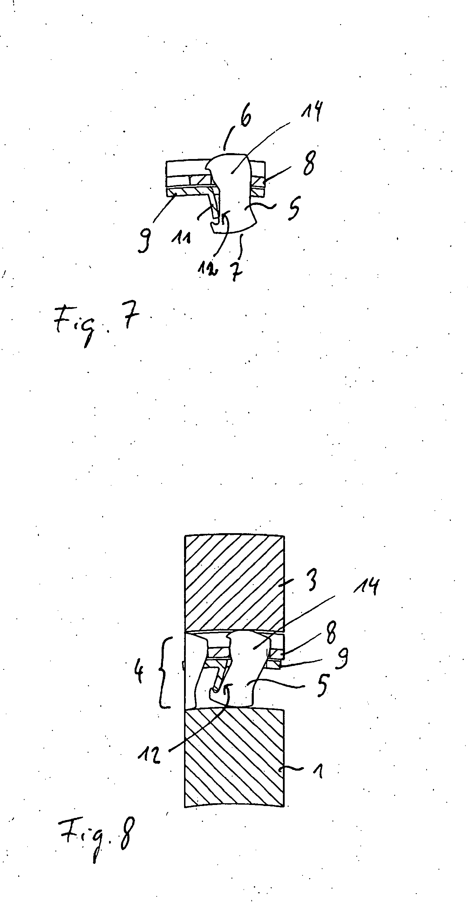

Fig. 6 und 7 stellen das Zusammenwirken von Klemmkörperkäfig 8, Bandelement 9 und Klemmkörper 5 dar. Bei der Montage wird das Bandelement 9 an die Innenfläche des Käfigs 8 gelegt, so daß es sich - da es sehr dünn ist - glatt anlegt. Dann werden die Klemmkörper 5 von außen durch die größen- und deckungsgleichen Durchbrüche 10 vom Käfig 8 und Bandelement (Federband) 9 geschoben, bis der Federsteg 11 in die Ausnehmung 12 am Klemmkörper 5 schnappt. Die Verdickung 14 an der Kontur des Klemmkörpers 5 verhindert das Durchfallen des Klemmkörpers 5 durch den Durchbruch 10.

## Patentansprüche

1. Klemmkörperfreilauf mit um eine gemeinsame Achse ineinander angeordneten, zueinander verdrehbarem Innenring (1) und Außenring (2), die einen Spalt (4) bilden, in dem Klemmelemente, insbesondere Klemmkörper (5) so angeordnet sind, daß mit den zugewandten Mantelflächen der Elemente (1,3) über Klemmflächen (6,7) der Klemmkörper (5) eine reibschlüssige Verbindung herstellbar ist, wobei die Klemmkörper (5) zur Lagesicherung in einen Klemmkörperkäfig (8) eingelegt sind, ein umlaufendes Bandelement (9) vorgesehen ist, welches Ausnehmungen (10) zur Aufnahme der Klemmkörper (5) aufweist, und das Bandelement (9) Stegelemente (11) zur Druckbeaufschlagung aufgenommener Klemmkörper (5) aufweist,
**dadurch gekennzeichnet, dass** die Stegelemente (11) in Ausnehmungen (12) der Klemmkörper (5) formschlüssig eingreifen.

2. Freilauf nach Anspruch 1,
**dadurch gekennzeichnet, daß** die Stegelemente (11) winklig zum Grundkörper des Bandelements (9) angeordnet sind.

3. Freilauf nach einem der vorhergehenden Ansprüche,
**dadurch gekennzeichnet, daß** die Stegelemente (11) einteilig mit dem Bandelement (9) verbunden sind.

4. Freilauf nach einem der vorhergehenden Ansprüche,
**dadurch gekennzeichnet, daß** das Bandelement (9) umlaufend parallel zum Klemmkörperkäfig (8) angeordnet ist.

## Claims

1. Clamping-body freewheel having an inner ring (1) and outer ring (2) which can be rotated with respect to one another, are arranged inside one another about a common axis and form a gap (4), in which clamping elements, in particular clamping bodies (5), are arranged in such a way that a frictional connection can be produced with the facing circumferential faces of the elements (1, 3) via clamping faces (6, 7) of the clamping bodies (5), the clamping bodies (5) being inserted into a clamping-body cage (8) for positional securing, a circumferential strap element (9) being provided which has recesses (10) for receiving the clamping bodies (5), and the strap element (9) having web elements (11) for loading received clamping bodies (5) with pressure, **characterized in that** the web elements (11) engage in a positively locking manner into recesses (12) of the clamping bodies (5).

2. Freewheel according to Claim 1, **characterized in that** the web elements (11) are arranged at an angle with respect to the main body of the strap element (9).

3. Freewheel according to one of the preceding claims, **characterized in that** the web elements (11) are connected integrally to the strap element (9).

4. Freewheel according to one of the preceding claims, **characterized in that** the strap element (9) is arranged circumferentially parallel to the clamping-body cage (8).

## Revendications

1. Roue libre de serrage dotée d'une bague intérieure (1) et d'une bague extérieure (2) disposées l'une dans l'autre dans un axe commun, pouvant être tournées l'une par rapport à l'autre et formant une fente (4) dans laquelle les éléments de serrage, notamment les corps de serrage (5), sont disposés de telle sorte qu'une jonction réalisée par complémentarité de frottements peut être réalisée avec les surfaces d'enveloppe tournées des éléments (1, 3) via les surfaces de serrage (6, 7) des corps de serrage (5), les corps de serrage (5) étant insérés en vue de sécuriser la position dans une cage de corps de serrage (8), un élément de bande (9) périphérique étant prévu lequel comporte des évidements (10) permettant de recevoir les corps de serrage (5) et l'élément de bande (9) comportant des éléments d'étai (11) servant à alimenter en pression les corps de serrage (5) logés à l'intérieur, **caractérisée en ce que** les éléments d'étai (11) s'imbriquent par complémentarité de formes dans les évidements (12) des corps de serrage (5).

2. Roue libre selon la revendication 1, **caractérisée en ce que** les éléments d'étai (11) sont disposés selon un certain angle par rapport au corps de base de l'élément de bande (9).

3. Roue libre selon l'une quelconque des revendications précédentes, **caractérisée en ce que** les éléments d'étai (11) sont reliés d'un seul tenant à l'élément de bande (9).

4. Roue libre selon l'une quelconque des revendications précédentes, **caractérisé en ce que** l'élément de bande (9) est disposé sur un plan périphérique, parallèlement à la cage de corps de serrage (8).
